# FASCICULE DE BREVET EUROPEEN

(11) **EP 1 279 286 B1**
(45) Date de publication et mention de la délivrance du brevet: **02.06.2004**
(21) Numéro de dépôt: 01917391.3
(22) Date de dépôt: 11.04.2001
(51) Int. Cl.: H04N 7/16, H04N 5/00

(54) **SYSTEME ET METHODE DE TRANSMISSION SECURISE DE DONNEES**
SYSTEM UND METHODE FÜR SICHERE DATENÜBERTRAGUNG
SECURE DATA TRANSMISSION SYSTEM AND METHOD

(30) Priorité: 17.04.2000 EP 00810331; 15.06.2000 CH 117900
(43) Date de publication de la demande: 29.01.2003
(73) Titulaire: Nagravision S.A., 1033 Cheseaux-sur-Lausanne (CH)
(72) Inventeur: STRANSKY, Philippe, CH-1261 Marchissy (CH)
(74) Mandataire: Wenger, Joel-Théophile
(86) Numéro de dépôt international: PCT/IB2001/000604
(87) Numéro de publication internationale: WO 2001/080563

(56) Documents cités:
- EP-A- 0 715 241
- EP-A- 0 975 165
- WO-A-97/46017

## Description

Cette invention est du domaine de la sécurisation de données, en particulier la sécurisation de données lors du transport.

Dans un schéma classique de distribution, le générateur des données, que celles-ci soient des informations audio/vidéo ou un programme informatique, les transmet à un diffuseur qui est en charge de les distribuer contre payement.

Selon ce schéma connu, les données sont donc stockées en clair chez le distributeur, ce dernier possédant des moyens d'encryptage lors de la diffusion au consommateur final.

Les données sont usuellement acheminées depuis le fournisseur jusqu'au diffuseur par un moyen tel qu'une liaison câblée ou par l'envoi d'un support de données, par exemple une bande magnétique.

Il a été constaté que ce transport présente un risque important de copies illicites, les données en clair se prêtant aisément à la copie.

Forts de cette constatation, fournisseur et diffuseur se sont mis d'accord pour que le transport de ces données de fasse uniquement après l'encryptage desdites données.

Cette solution est satisfaisante du point de vue d'un détournement illicite de ces données lors du transport. Une fois les données arrivées à bon port, elles sont lues et stockées sur un serveur vidéo en vue de leur diffusion.

Néanmoins, le fournisseur, une fois les données transmises au diffuseur, perd le contrôle sur ses données et des copies illicites peuvent être produites à partir du serveur vidéo par des personnes mal intentionnées.

Ce même problème se retrouve lorsque le diffuseur transmet ces données encryptées au consommateur final qui a donc les moyens de les décrypter et peut ainsi en disposer en clair. Des copies non autorisées peuvent alors être produites depuis ce consommateur.

De plus, l'apparition de normes d'encryption dans le domaine de transmission de données limite les possibilités de sécurisation en imposant les algorithmes utilisés.

Le but de la présente invention est d'assurer la diffusion de données au travers de tous les différents intermédiaires tout en assurant un contrôle sur le nombre d'utilisations de ces données.

Ce but est atteint par un système de gestion et une methode de gestion tels que définis dans les revendications indépendantes.

Ainsi; l'unité en charge de décrypter les données audio/vidéo va, sur la base des informations d'accès conditionnel, déterminer si l'utilisateur possède les droits nécessaires.

L'utilisation d'un deuxième type d'encryption permet de renforcer une encryption basée sur un système connu car imposé par une norme.

### Le système au niveau de l'abonné

Afin de rendre les transmissions de données inviolables, le flux transmis comprend les données encryptées par des mots de contrôle CW ainsi que des informations de décryptage contenues dans un fichier appelé MT (Meta Data). Les mots de contrôle (CW) jouent le jeu de clefs de décryptage variant dans le temps. Ce fichier de Meta Data contient d'une part les clefs de décryptage sous la forme de mots de contrôle CW et d'autre part une définition des droits nécessaires au décryptage que ce soit un abonnement ou le payement d'une redevance directement liée à cette émission. Ce fichier est encrypté par un algorithme de type IDEA dont la sécurité est supérieure aux algorithmes utilisés pour l'encryption par mots de contrôle (CW).

Du côté de l'abonné se trouve un module de sécurité, usuellement sous la forme d'une carte à puce, qui contient les droits de l'abonné (son crédit entre autre) et compare ses droits avec ceux requis par l'émission. Si les droits le permettent, le module de sécurité décrypte le fichier de Meta Data et retourne les mots de contrôle CW nécessaires au décryptage des données.

De plus en plus d'installations d'abonnés comprennent des unités de stockage des informations tel qu'un disque dur. Ceci permet de revisualiser une scène, d'effectuer un ralenti tout en ne perdant nullement les informations diffusées pendant la revisualisation.

Ces unités sont capables de stocker l'entier d'un film pour le proposer ensuite à la vente à l'abonné. Un tel téléchargement se fait en général la journée, période pendant laquelle le trafic est le plus faible. Si l'abonné accepte la proposition d'achat, il peut le visualiser quand bon lui semble.

Ce procédé présente l'inconvénient de disposer sur un support numérique donc facilement copiable, d'informations dont on désire contrôler l'utilisation. Ceci est également valable lors de la transmission de logiciel. En effet, l'installation de l'abonné peut être un ordinateur sur lequel est connecté un module de sécurité et le téléchargement peut représenter une programme de jeu par exemple.

Selon l'invention, les données sont transmises encryptées par un premier type d'encryption, accompagnées par un fichier de messages de contrôle étant eux-mêmes encryptés par une clé de distribution selon un deuxième type d'encryption. Dans ce fichier sont également inclus les informations d'accès conditionnel, définissant les droits à une utilisation immédiate et les droits associés à une utilisation différée.

Le flux de données est stocké sous forme encryptée dans l'unité de l'abonné, ceci interdisant toute utilisation abusive. Chaque utilisation subséquente des données nécessite la présence du module de sécurité. Ce dernier peut alors contrôler les droits d'une utilisation différée, par exemple pour la limiter dans le temps, voire de ne l'autoriser qu'un certain nombre de fois.

Dans le cas ou un certain nombre d'utilisation est autorisée, le message de contrôle comprend l'identificateur de l'émission, le nombre maximum d'utilisation ainsi qu'éventuellement un indicateur de persistance. Lors de la première utilisation, le module de sécurité va initialiser un compteur propre à cette émission qui sera incrémenté à chaque décryptage par le module de sécurité. Lorsque le maximum est atteint, le décryptage sera interdit.

L'indicateur de persistance permet au module de sécurité de savoir dans quel délai le compteur de cette émission peut être effacé. Afin de ne pas remplir la mémoire du module de sécurité avec ces informations, lorsque la date de cet indicateur est dépassée, la portion de mémoire allouée à cette opération peut être réutilisée. Il est avantageusement libellé en jour (1 à 250 jours) à partir de la première utilisation.

### Le système au niveau du diffuseur

Le diffuseur dispose d'une gigantesque unité de stockage qui regroupe toutes les émissions à diffuser. On l'appelle couramment serveur vidéo. Certaines émissions seront diffusées une fois, telles que les informations télévisées, alors que d'autres vont être diffusées en boucle pendant plusieurs jours afin d'être proposées à l'achat aux abonnés.

Ces émissions arrivent cryptées, accompagnées par des messages de contrôle cryptés par une première clé propre au fournisseur. Ces données sont stockées dans l'unité de stockage sous forme cryptée afin de prévenir toute fuite ou copie illicite.

Lors de l'utilisation de ces données, le serveur vidéo transmet les données encryptées en vue de leur diffusion. Ces données sont accompagnées par l'envoi par le serveur vidéo, du fichier des informations de décryptage à une unité de sécurité.

Cette unité effectue un décryptage de ce fichier afin d'en extraire les mots de contrôle CW et de vérifier les droits d'utilisation. Une fois cette opération terminée, le module de sécurité encrypte ces mots de contrôle en y joignant de nouveaux droits d'utilisation. Ces nouveaux droits sont définis par le diffuseur et peuvent comprendre une condition sur un abonnement ou lier l'utilisation à l'achat de l'émission. C'est à ce stade que le nombre d'utilisation, soit de visualisation, est défini.

Ce nouveau fichier d'informations de décryptage est ensuite transmis avec le flux de données encryptées.

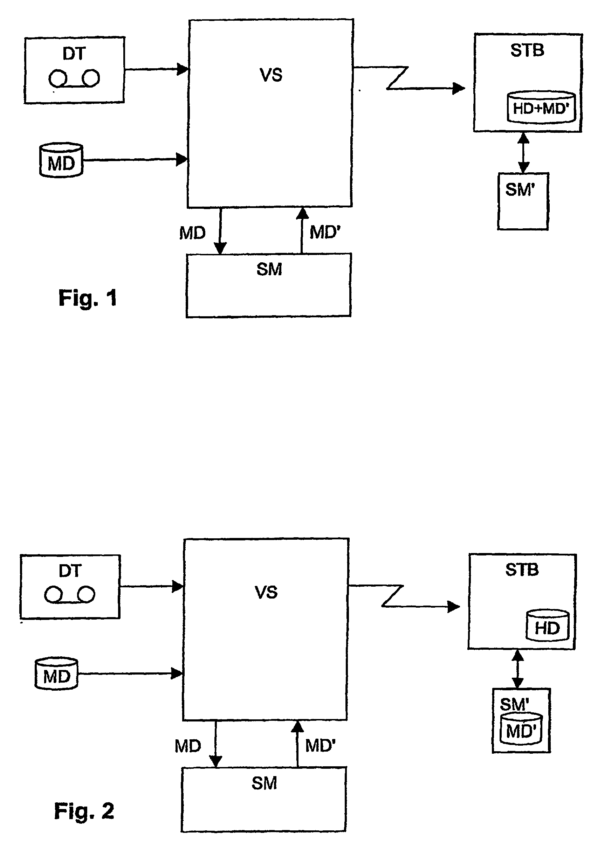

L'invention sera mieux comprise grâce à la description détaillée qui va suivre et qui se réfère aux dessins annexés qui sont donnés à titre d'exemple nullement limitatif, dans lesquels les figures 1 et 2 représentent deux variantes de l'invention.

Le serveur vidéo VS reçoit les données DT sous forme de bande selon notre exemple mais qui peuvent être transmises par n'importe quel moyen connu de transmission. Le fichier des informations de décryptage MD est également fourni au serveur vidéo. Ce fichier est généralement fourni en même temps c'est-à-dire qu'il se trouvera avantageusement sur la même bande que les données encryptées. Néanmoins, si l'on désire renforcer la sécurité, il est possible de faire transiter le fichier MD par d'autres moyens.

Une fois ces deux fichiers dans le serveur vidéo VS, le système est prêt pour la diffusion.

A ce moment, le fichier MD est transmis au module de sécurité SM pour y adjoindre les droits que l'on désire définir pour cette émission. Le module décrypte le fichier MD puis ajoute les informations relatives aux droits nécessaires à la visualisation et retourne au serveur VS ce nouveau fichier MD' encrypté par une clef de transport.

Les données DT ainsi que ce nouveau fichier sont diffusés à l'intention des différents modules d'abonné STB.

Du fait que le décryptage des données DT ne peut se faire sans le fichier MD', celui-ci est en général envoyé préalablement.

Les données arrivant au décodeur STB sont soit traitées immédiatement, soit stockées pour usage ultérieur dans l'unité HD. Dans ce deuxième cas, il est clair que le fichier MD' doit également être stocké dans l'unité HD tel qu'illustré à la figure 1.

Pour obtenir les données en clair, ce fichier MD' est présenté au module de sécurité de l'abonné SM' afin qu'il puisse décrypter ledit fichier et en extraire les mots de contrôle CW.

Selon une variante de l'invention telle qu'illustrée dans la figure 2, le fichier MD' est stocké uniquement dans le module de sécurité de l'abonné SM'. Ainsi, toute tentative de rechercher les corrélations entre le contenu des données et le fichier MD', est vouée à l'échec.

Dans le cadre de l'invention, il est proposé un module de pré-encryptage destiné à produire les données DT sous forme encryptées. Ce module reçoit les données en clair et produit le couple de données encryptées DT et le fichier MD.

Selon la structure de sécurité choisie, le fichier DT est encrypté selon un premier mode d'encryption, les mots de contrôle CW servant de clés de décryption. Il s'agit de préférence d'un mode symétrique du fait de la rapidité exigée pour le traitement Ces mots de contrôle CW sont à leur , tour encryptés selon un deuxième mode d'encryption, DES par exemple.

Lorsqu'il s'agit de grouper l'ensemble des mots de contrôle dans un fichier MD, l'encryption de ce fichier est d'un troisième type de haut niveau cryptographique, par exemple IDEA. En effet, les conséquences d'une attaque victorieuse sur ce fichier étant bien plus grave que sur un mot de contrôle.

## Revendications

1. Système de gestion des droits d'un contenu de données audio/vidéo encrypté par au moins un mot de contrôle (CW) accompagné d'un ficher (MD) encrypté contenant le ou les mots de contrôle (CW) et des premières conditions d'utilisation du contenu encrypté définies par le fournisseur du contenu, **caractérisé en ce que** ce système comprend des moyens pour décrypter le fichier (MD), de moyens pour vérifier si les premières conditions sont remplies et dans l'affirmative, pour réencrypter ce fichier (MD) en y associant des secondes conditions d'utilisation définies par le diffuseur.

2. Système selon la revendication 1, **caractérisé en ce que** les secondes conditions comprennent au moins une section définissant les droits d'utilisation immédiate du contenu encrypté et une section définissant les droits d'utilisation différée du contenu encrypté.

3. Système selon la revendication 2, **caractérisé en ce que** la section définissant les droits d'utilisation différée comprend le type d'abonnement nécessaire, le prix de l'utilisation du contenu ou le nombre d'utilisation maximum.

4. Système selon les revendications 1 à 3, **caractérisé en ce que** ce système fait partie d'un serveur vidéo (VS) disposant d'un module de sécurité (SM) en charge de définir les données définissant les conditions d'accès aux dites données audio/vidéo.

5. Méthode de gestion des droits d'un contenu encrypté par au moins un mot de contrôle (CW) comprenant les étapes suivantes:
- encryptage de données audio/vidéo au moyen de clefs de cryptage (CW) variant en fonction du temps dans un premier lieu correspondant au fournisseur de ces données,
- encryptage d'un fichier (MD) formé par les clefs de cryptage et des premières conditions d'accès aux dites données audio/vidéo définie par le fournisseur,
- transmission et stockage des données audio/vidéo indépendamment du fichier (MD),
- lors de l'utilisation de ces données par un diffuseur, transmission du fichier (MD) à un module de contrôle en charge de décrypter ce fichier (MD) et de vérifier les premières conditions d'accès,
- re-encryption du fichier (MD) avec des secondes conditions d'accès correspondant aux conditions définies par le diffuseur.

6. Méthode selon la revendication 5, **caractérisée en ce qu'**elle consiste à définir les secondes conditions d'accès par une section définissant les droits d'utilisation immédiate du contenu encrypté et une section définissant les droits d'utilisation différée du contenu encrypté.

## Patentansprüche

1. System der Verwaltung von Rechten auf den Inhalt von Audio-/Videodaten, der durch zumindest ein Kennwort (CW) verschlüsselt ist und von einer verschlüsselten Datei (MD) begleitet wird, die das oder die Kennwörter (CW) sowie erste Nutzungsbedingungen des verschlüsselten Inhalts enthält, die durch den Lieferanten des Inhalts definiert worden sind, **dadurch gekennzeichnet, dass** dieses System Mittel umfasst, um die Datei (MD) zu entschlüsseln, sowie Mittel, um zu überprüfen, ob die ersten Bedingungen erfüllt sind, und wenn ja, um diese Datei (MD) neu zu verschlüsseln und dabei zweite Nutzungsbedingungen beizufügen, die durch den Vertreiber definiert worden sind.

2. System gemäss Anspruch 1, **dadurch gekennzeichnet, dass** die zweiten Bedingungen zumindest einen Abschnitt umfassen, der die Rechte einer sofortigen Nutzung des verschlüsselten Inhalts definiert, sowie einen Abschnitt, der die Rechte einer aufgeschobenen Nutzung des verschlüsselten Inhalts definiert.

3. System gemäss Anspruch 2, **dadurch gekennzeichnet, dass** der Abschnitt, der die Rechte einer aufgeschobenen Nutzung definiert, den Typ der erforderlichen Subskription, den Preis der Nutzung des Inhalts oder die maximale Anzahl von Nutzungen umfasst.

4. System gemäss den Ansprüchen 1 bis 3, **dadurch gekennzeichnet, dass** dieses System Teil eines Videoservers (VS) darstellt, der über einen Sicherungsmodul (SM) verfügt, der die Aufgabe hat, die Daten zu definieren, die die Bedingungen des Zugriffs auf diese Audio- bzw. Videodaten definieren.

5. Verfahren der Verwaltung der Rechte auf einen durch zumindest ein Kennwort (CW) verschlüsselten Inhalt, die folgenden Schritte umfassend:
- Verschlüsselung von Audio-/Videodaten mit Verschlüsselungsschlüsseln (CW), die in Abhängigkeit von der Zeit variieren, an einem ersten Ort, der dem Lieferanten dieser Daten entspricht,
- Verschlüsselung einer Datei (MD), die aus den Verschlüsselungsschlüsseln sowie aus ersten Bedingungen des Zugriffs auf diese Audio-/Videodaten, die durch den Lieferanten definiert werden, gebildet wird,
- Übermittlung und Speicherung der Audio-Nideodaten unabhängig von der Datei (MD),
- bei Nutzung dieser Daten durch einen Vertreiber Übermittlung der Datei (MD) an einen Steuermodul, der die Aufgabe hat, diese Datei (MD) zu entschlüsseln und die ersten Zugriffsbedingungen zu überprüfen,
- Wiederverschlüsselung der Datei (MD) mit zweiten Zugriffsbedingungen, die den durch den Vertreiber definierten Bedingungen entsprechen.

6. Verfahren gemäss Anspruch 5, **dadurch gekennzeichnet, dass** dieses darin besteht, die zweiten Zugriffsbedingungen durch einen Abschnitt zu definieren, der die Rechte einer sofortigen Nutzung des verschlüsselten Inhalts definiert, sowie einen Abschnitt, der die Rechte einer aufgeschobenen Nutzung des verschlüsselten Inhalts definiert.

## Claims

1. Management system of the rights of an audio/video data content encrypted by at least one control word (CW) accompanied by an encrypted file (MD) containing the control word(s) (CW) and first conditions of using of the encrypted content defined by the provider of the content, **characterized in that** this system comprises means for decrypting the file (MD), means for verifying if the first conditions are completed and if so, for re-encrypting this file (MD) by associating to it second conditions of using defined by the distributor.

2. System according to claim 1, **characterized in that** the second conditions comprise at least a section defining the rights of immediate using of the encrypted content and a section defining the rights of deferred using of the encrypted content.

3. System according to claim 2, **characterized in that** the section defining the rights of deferred using comprise the necessary subscription type, the price of using of the content or the maximum number of uses.

4. System according to claims 1 to 3, **characterized in that** the system belongs to a video server (VS) supplied with a security module (SM) in charge to define the data defining the access conditions to said audio/video data.

5. Method of managing the rights of a content encrypted by at least one control word (CW) comprising following steps:
- encryption of audio/video data with encryption keys (CW) that vary depending on time in a first location corresponding to the provider of these data,
- encryption of a file (MD) formed by the encryption keys and the first access conditions to said audio/video data defined by the provider,
- transmission and storage of the audio/video data independently from the file (MD),
- when these data are used by a distributor, transmission of the file (MD) to a control module in charge to decrypt this file (MD) and to verify the first access conditions,
- re-encrypting of the file (MD) with second access conditions corresponding to the conditions defined by the distributor.

6. Method according to claim 5, **characterized in that** it consists to define the second access conditions by a section defining the rights of immediate using of the encrypted content and a section defining the rights of deferred using of the encrypted content.
